# EUROPÄISCHE PATENTSCHRIFT

(11) **EP 2 327 999 B1**
(45) Veröffentlichungstag und Bekanntmachung des Hinweises auf die Patenterteilung: **29.07.2015**
(21) Anmeldenummer: 09177417.4
(22) Anmeldetag: 27.11.2009
(51) Int. Cl.: G01T 1/208, G01T 1/29

(54) **Vorrichtung zum Auslesen von in einer Speicherleuchtstoffschicht gespeicherter Röntgeninformation und elektrische Schaltung**
Apparatus for reading out x-ray information stored in a storage phosphor layer and electrical circuit
Dispositif pour la lecture d'images dans un écran luminescent stimulable et circuit électrique

(43) Veröffentlichungstag der Anmeldung: 01.06.2011
(73) Patentinhaber: Agfa HealthCare N.V., 2640 Mortsel (BE)
(72) Erfinder: Romanski, Heinz-Josef, D-36199 Rotenburg (DE)
(74) Vertreter: Linsmeier, Josef

(56) Entgegenhaltungen:
- EP-A1- 0 066 763
- JP-A- 7 142 024

## Beschreibung

Die Erfindung betrifft eine Vorrichtung zum Auslesen von in einer Speicherleuchtstoffschicht gespeicherter Röntgeninformation sowie eine entsprechende elektrische Schaltung gemäß dem Oberbegriff von Anspruch 1 bzw. 2.

Eine Möglichkeit zur Aufzeichnung von Röntgenbildern besteht darin, die durch ein Objekt, beispielsweise einen Patienten, hindurch tretende Röntgenstrahlung als latentes Bild in einer so genannten Speicherleuchtstoffschicht zu speichern. Zum Auslesen des latenten Bildes wird die Speicherleuchtstoffschicht mit Stimulationslicht bestrahlt und dabei zur Aussendung von Emissionslicht angeregt. Das Emissionslicht, dessen Intensität dem in der Speicherleuchtstoffschicht gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinisch-diagnostischen Zwecken, bereitgestellt, indem sie an einem entsprechenden Ausgabegerät, wie z. B. einem Monitor oder Drucker, ausgegeben werden. Zum Erfassen des in der Speicherleuchtstoffschicht angeregten Emissionslichts werden u.a. Photomultiplier (PMT) eingesetzt, welche im Wesentlichen eine Elektronenröhre mit einer Photokathode und einem Sekundärelektronenvervielfacher umfassen und zur Erfassung und Verstärkung schwacher Lichtsignale besonders geeignet sind.

Aus US 5,072,119 ist bekannt, einen Photomultiplier mit unterschiedlichen Hochspannungen zu betreiben, wobei der jeweilige Hochspannungswert in Abhängigkeit vom jeweiligen Typ der auszulesenden Speicherleuchtstoffschicht eingestellt wird.

Mit der jeweils eingestellten Hochspannung wird jedoch nicht nur die Verstärkung der erfassten Lichtsignale, sondern auch das Verhalten des Photomultipliers im Hinblick auf dessen Linearität sowie dessen Rausch- und Zeitverhalten verändert, so dass beim Auslesen unterschiedlicher Typen von Speicherleuchtstoffschichten mit unterschiedlichen Hochspannungen in der Regel deutlich unterschiedliche Bildqualitäten erhalten werden. Ebenso verändert sich das Verhalten eines Photomultipliers im Hinblick auf dessen Linearität sowie dessen Rausch- und Zeitverhalten in Abhängigkeit von der auf die Photokathode einfallenden Lichtmenge und der daraus in Abhängigkeit von der eingestellten Hochspannung erzeugten Sekundärelektronenströme zwischen den Dynoden.

Aus JP 07 142024 A ist eine Vorrichtung mit einem Photomultiplier bekannt, bei welchem zwischen einer positiven Elektrode und einer ersten Dynode eine Hochspannung angelegt wird. Ferner wird zwischen einer Photokathode und der ersten Dynode eine von der Hochspannung unabhängige Konstantspannung eingeprägt. EP 0 066 763 A1 zeigt einen Photomultiplier, bei welchem zwischen einer Anode und einer Kathode eine Hochspannung anliegt. Zwei Dynoden sind mit einer Widerstandskontrolleinheit verbunden, durch welche der Spannungsabfall zwischen den beiden Dynoden und damit die Verstärkung des Photomultipliers gesteuert werden kann.

Es ist Aufgabe der vorliegenden Erfindung, das Verhalten des Photomultipliers, insbesondere hinsichtlich Linearität, Rausch- und Zeitverhalten, zu verbessern und eine möglichst hohe Bildqualität auch bei unterschiedlich großen Hochspannungen und unterschiedlich hohen Lichtintensitäten zu gewährleisten.

Diese Aufgabe wird durch eine Vorrichtung gemäß Anspruch 2 bzw. eine entsprechende elektrische Schaltung gemäß Anspruch 1 gelöst, indem ein Photomultiplier, der zum Erfassen von Licht und zum Umwandeln des erfassten Lichts in ein Ausgangssignal, insbesondere einen Ausgangsstrom oder eine entsprechend umgewandelte Ausgangsspannung, ausgebildet ist und eine oder mehrere Dynoden aufweist, mit einem Spannungsteiler beschaltet wird, der mehrere Widerstände umfasst, durch welche eine am Spannungsteiler anliegende Hochspannung in mehrere Teilspannungen zerlegt wird, welche an den Dynoden anliegen, wobei mindestens ein Schaltungselement vorgesehen ist, durch welches zumindest ein Teil der Verhältnisse von Teilspannungen zueinander in Abhängigkeit von der Hochspannung und/oder vom Ausgangssignal des Photomultipliers automatisch verändert wird.

Die Erfindung basiert auf dem Gedanken, die Eigenschaften des Spannungsteilers, durch welchen den einzelnen Dynoden des Photomultipliers die Hochspannung zugeführt wird, in Abhängigkeit von der jeweils anliegenden Hochspannung und/oder vom jeweiligen Ausgangssignal, d.h. vom Ausgangsstrom und/oder von dem in eine Ausgangsspannung umgewandelten Ausgangsstrom, des Photomultipliers zu verändern, indem sich zumindest ein Teil der Verhältnisse von Spannungsabfällen an den Widerständen des Spannungsteilers automatisch in Abhängigkeit von der jeweils angelegten Hochspannung bzw. dem jeweils erhaltenen Ausgangssignal des Photomultipliers einstellt. Auf diese Weise können die Spannungsteilungsverhältnisse des Spannungsteilers derart an die jeweils anliegende Hochspannung bzw. an das Ausgangssignal des Photomultipliers angepasst werden, dass dieser in einem optimalen Arbeitspunkt betrieben wird und infolge dessen eine höhere Linearität sowie ein besseres Rausch- und Zeitverhalten zeigt. Auf diese Weise kann auch bei unterschiedlichen Hochspannungen und/oder Ausgangssignalstärken, wie sie im Allgemeinen beim Auslesen von Röntgenbildern aus unterschiedlichen Speicherleuchtstoffschicht-Typen und/oder bei unterschiedlichen Applikationen verwendet werden, eine gleichbleibend hohe Bildqualität gewährleistet werden. Bei unterschiedlichen Speicherleuchtstoffschicht-Typen handelt es sich beispielsweise um sog. Powder Image Plates (PIP) oder sog. Needle Image Plates (NIP), bei unterschiedlichen Applikationen beispielsweise um mammographische Röntgenaufnahmen oder allgemeine Röntgenaufnahmen, beispielsweise von Extremitäten, Skelett oder Lunge.

Erfindungsgemäss ist das Schaltungselement als ein von der Hochspannung und/oder vom Ausgangssignal abhängiger Widerstand ausgebildet. Hierdurch kann zumindest ein Teil der Verhältnisse von Teilspannungen zueinander auf einfache Weise abhängig von der Hochspannung bzw. vom Ausgangssignal verändert werden.

Vorzugsweise umfasst der von der Hochspannung und/ vom Ausgangssignal abhängige Widerstand einen Teilwiderstand, welcher ein nicht-ohmsches Verhalten aufweist. Auf diese Weise kann eine Spannungsabhängigkeit des Widerstandes besonders einfach realisiert werden. Hierbei ist bevorzugt, dass der Teilwiderstand mit nicht-ohmschem Verhalten als Konstantspannungsquelle ausgebildet ist.

Alternativ oder zusätzlich kann vorgesehen sein, dass der Teilwiderstand mit nicht-ohmschem Verhalten als Spannungsquelle ausgebildet ist, deren Spannung in Abhängigkeit vom Ausgangssignal einstellbar ist. Hiermit kann der Einfluss unterschiedlich hoher Lichtintensitäten auf das Verhalten des Photomultipliers und damit auf die Bildqualität signifikant reduziert werden.

Der von der Hochspannung und/oder vom Ausgangssignal abhängige Widerstand kann darüber hinaus einen Teilwiderstand mit einem ohmschen Verhalten aufweisen. In Kombination mit dem nicht-ohmschen Teilwiderstand lässt sich damit ein gewünschter Verlauf des Widerstands des Schaltungselements in Abhängigkeit von der Hochspannung bzw. vom Ausgangssignal gezielt einstellen.

Bei dem Ausgangssignal handelt es sich vorzugsweise um den vom Photomultiplier erzeugten Ausgangsstrom an der Anode des Photomultipliers oder einer aus dem Ausgangsstrom abgeleiteten Ausgangsspannung, welche vorzugsweise durch Umwandlung des Ausgangsstroms durch einen geeigneten Wandler in eine entsprechende Ausgangsspannung erhalten wird.

In einer weiteren vorteilhaften Ausgestaltung der Erfindung ist ein Schaltungselement als ein von der Hochspannung abhängiger Widerstand ausgebildet, welcher zwischen der Kathode des Photomultipliers und einer ersten Dynode, welcher der Kathode am nächsten liegt, geschaltet ist. Hierdurch wird eine besonders hohe und von der Hochspannung im Wesentlichen unabhängige Linearität im Verhalten des Photomultipliers erreicht.

Erfindungsgemäss ist das mindestens eine Schaltungselement als ein von der Hochspannung abhängiger Widerstand ausgebildet, welcher einer letzten Dynode, die der Anode des Photomultipliers am nächsten liegt, nachgeschaltet ist. Insbesondere ist hierbei der von der Hochspannung abhängige Widerstand in Reihe zwischen der letzten Dynode und einem Massepotenzial geschaltet. Auch durch diese Maßnahme wird eine hohe Linearität im Verhalten des Photomultipliers erreicht, welche weniger stark von der jeweils eingestellten Hochspannung abhängt, so dass eine gleichbleibend hohe Bildqualität gewährleistet werden kann.

Bei einer weiteren vorteilhaften Weiterbildung der Erfindung sind zumindest ein Teil der verwendeten Widerstände als aktive Widerstände ausgebildet, welche vorzugsweise in Form von Transistorschaltungen oder entsprechenden integrierten Schaltungen realisiert werden können. Durch den, zumindest teilweisen, Einsatz von aktiven Widerständen können die bei rein passiven Widerständen auftretenden Wärmeverluste erheblich reduziert werden.

Weitere Merkmale und Vorteile der Erfindung ergeben sich aus der folgenden Beschreibung bevorzugter Ausführungsformen und Anwendungsbeispiele, wobei Bezug auf die beigefügten Zeichnungen genommen wird.

Es zeigen:
- Fig. 1: eine Vorrichtung zum Auslesen einer Speicherleuchtstoffschicht;
- Fig. 2: ein erstes Beispiel einer elektrischen Schaltung zur Beschaltung des Photomultipliers;
- Fig. 3: ein Diagramm zur Veranschaulichung der Spannungsabhängigkeit des Widerstandes;
- Fig. 4: ein Diagramm zur Veranschaulichung des Verhaltens des Photomultipliers; und
- Fig. 5: ein zweites Beispiel einer elektrischen Schaltung zur Beschaltung des Photomultipliers.

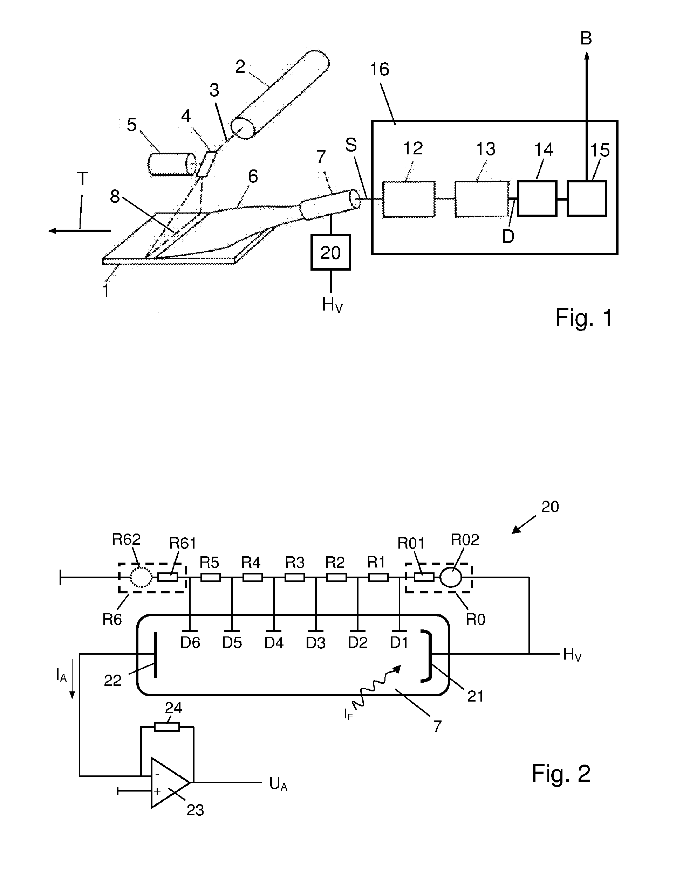

Fig. 1 zeigt eine Vorrichtung zum Auslesen einer Speicherleuchtstoffschicht 1. Durch einen Laser 2 wird ein Stimulationslichtstrahl 3 erzeugt, welcher durch ein von einem Motor 5 in Rotation versetztes Ablenkelement 4 derart abgelenkt wird, dass sich dieser entlang einer Zeile 8 über die auszulesende Speicherleuchtstoffschicht 1 bewegt. Das Ablenkelement 4 ist vorzugsweise als Spiegel, insbesondere als Polygonspiegel oder Galvanometerspiegel, ausgebildet.

Während der Bewegung des Stimulationslichtstrahls 3 entlang der Zeile 8 sendet die Speicherleuchtstoffschicht 1 in Abhängigkeit der darin gespeicherten Röntgeninformation Emissionslicht aus, welches von einer optischen Sammeleinrichtung 6, beispielsweise einem Lichtleiterbündel, gesammelt, weitergeleitet und von einem an die Sammeleinrichtung 6 gekoppelten Photomultiplier 7 erfasst und in ein entsprechendes analoges Detektorsignal S umgewandelt wird.

Der Photomultiplier 7, im Folgenden auch PMT genannt, umfasst im Wesentlichen eine Elektronenröhre mit einer Photokathode und einem nachgeschalteten Sekundärelektronenvervielfacher und ermöglicht eine Detektion schwacher Lichtsignale - bis hin zu einzelnen Photonen - sowie deren Umwandlung in elektrische Signale und deren Verstärkung.

Das Detektorsignal S wird einer Verarbeitungseinrichtung 16 zugeführt, in welcher Bildsignalwerte B für einzelne Bildpunkte des ausgelesenen Röntgenbildes abgeleitet werden. Durch einen Transport der Speicherleuchtstoffschicht 1 in Transportrichtung T wird ein sukzessives Auslesen einzelner Zeilen 8 erreicht und damit ein zweidimensionales, aus einzelnen Bildpunkten mit jeweils einem zugehörigen Bildsignalwert B bestehendes Röntgenbild erhalten.

Das analoge Detektorsignal S wird in dem hier dargestellten Ausführungsbeispiel zunächst durch ein Tiefpassfilter 12 gefiltert, wobei höherfrequente Anteile des Detektorsignals S, insbesondere Rauschanteile, eliminiert oder zumindest reduziert werden. Das gefilterte, analoge Detektorsignal S wird einer Digitalisierungseinrichtung 13 zugeführt und dort mit einer vorgegebenen Abtastfrequenz abgetastet und digitalisiert, wobei pro Abtastvorgang ein digitaler Detektorsignalwert D in digitalen Einheiten erhalten wird. Die Abtastfrequenz liegt typischerweise zwischen 1 und 12 MHz. Das Abtasten des analogen Detektorsignals S in der Digitalisierungseinrichtung 13 erfolgt vorzugsweise nach dem sog. Sample and Hold-Prinzip, bei welchem die jeweils aktuelle analoge Signalhöhe des zu einem Abtastzeitpunkt an der Digitalisierungseinrichtung 13 anliegenden Detektorsignals S gehalten und in einen entsprechenden digitalen Detektorsignalwert D umgewandelt wird.

Aus den in einem Speicher 14 zwischengespeicherten digitalen Detektorsignalwerten D werden schließlich in einer Recheneinheit 15 die einzelnen Bildsignalwerte B ermittelt, indem z.B. zwei oder mehrere Detektorsignalwerte D zu einem Bildpunkt zusammengefasst werden und daraus - beispielsweise durch Mittelwertbildung - ein zu diesem Bildpunkt gehörender Bildsignalwert B berechnet wird.

Dem PMT 7 wird über eine elektrische Schaltung 20 eine Hochspannung Hᵥ zugeführt, was im Folgenden näher erläutert wird.

Fig. 2 zeigt ein erstes Beispiel einer elektrischen Schaltung 20 zur Beschaltung des PMT 7, welcher eine Kathode 21, eine Anode 22 sowie mehrere Dynoden D1 bis D6 umfasst. Eine Hochspannung H_{V}, typischerweise zwischen 100 V und 2000 V, liegt einerseits an der Kathode 21 an und wird andererseits über einen Spannungsteiler, welcher die Widerstände R0 bis R6 umfasst, auf die einzelnen Dynoden D1 bis D6 verteilt. Die Ausgangsspannung U_{A} des PMT 7 entspricht dem an der Anode 22 abgegriffen Strom I_{A}, der durch einen Operationsverstärker 23, dem ein Widerstand 24 parallel geschaltet ist, in eine Ausgangsspannung U_{A} umgewandelt wird. Die Ausgangsspannung U_{A} entspricht dem im Zusammenhang mit Fig. 1 erwähnten analogen Detektorsignal S.

Wenn von der Speicherleuchtstoffschicht 1 ausgesandtes Emissionslicht einer bestimmten Intensität I_{E} in den PMT 7 eintritt, so werden in der Kathode 21 Photoelektronen erzeugt, welche entlang der Strecke der einzelnen Dynoden D1 bis D6 vervielfacht werden. Durch eine entsprechende Dimensionierung der einzelnen Widerstände R0 bis R6 des Spannungsteilers kann die Sekundärelektronenvervielfachung beeinflusst werden.

In dem gezeigten Beispiel ist zwischen der Kathode 21 und der ersten Dynode D1, welche der Kathode 21 am nächsten liegt, ein von der anliegenden Hochspannung H_{V} abhängiger Widerstand R0 geschaltet. Der Widerstand R0 weist in diesem Fall einen Teilwiderstand R01 mit ohmschen Verhalten sowie einen Teilwiderstand R02 mit nicht-ohmschen Verhalten auf. Bei dem Teilwiderstand R02 mit nicht-ohmschen Verhalten handelt es sich bei dem vorliegenden Beispiel um eine Konstantspannungsquelle.

Die Funktionsweise des spannungsabhängigen Widerstandes R0 soll anhand des nachfolgenden Beispiels veranschaulicht werden.

Bei einer Hochspannung H_{V} von 1400 V würde im Falle identischer ohmscher Widerstände R0 bis R6 an jedem Widerstand eine Spannung von 200 V abfallen, so dass zwischen Kathode 21 und der ersten Dynode D1 sowie zwischen den einzelnen Dynoden D1 bis D6 jeweils eine Spannung von 200 V abfallen würde. Eine Halbierung der Hochspannung H_{V} auf 700 V würde den Spannungsabfall auf jeweils 100 V halbieren, so dass zwischen Kathode 21 und erster Dynode D1 sowie zwischen allen weiteren Dynoden jeweils eine Spannung von 100 V abfallen würde. Die Verhältnisse der Teilspannungen, welche an den einzelnen Widerständen R0 bis R6 abfallen, sind in diesem Fall alle gleich 1 und unabhängig von der jeweils anliegenden Hochspannung H_{V}.

Im vorliegenden Beispiel umfasst der Widerstand R0 jedoch nicht nur einen ohmschen Teilwiderstand R01, welcher beispielsweise mit den anderen ohmschen Widerständen R1 bis R6 identisch ist, sondern auch eine Konstantspannungsquelle von beispielsweise 200 V. Bei einer anliegenden Hochspannung H_{V} von 1400 Volt würde an den Widerständen R01 und R1 bis R6 jeweils eine Spannung U_{R01} und U_{R1} bis U_{R6} von ca. 170 V abfallen, wobei jedoch zwischen der Kathode 21 und der ersten Dynode D1 in diesem Fall der Spannungsabfall um die Konstantspannung von 200 V höher ist und somit U_{R0} = 200 V + 170 V = 370 V beträgt. Wird nun die anliegende Hochspannung H_{V} auf 700 Volt halbiert, so verringert sich der jeweilige Spannungsabfall U_{R01} und U_{R1} bis U_{R6} an den ohmschen Widerständen R01 und R1 bis R6 auf ca. 70 Volt, wobei der Spannungsabfall zwischen Kathode 21 und erster Dynode D1 wegen der konstanten Spannung von 200 V nunmehr insgesamt U_{R0} = 70 V + 200V = 270 Volt beträgt.

Eine Verminderung der Hochspannung um 50 % von 1400 Volt auf 700 Volt hat somit bei der dargestellten Schaltung an dem zwischen der Kathode 21 und der ersten Dynode D1 geschalteten Widerstand R0 einen Spannungsabfall zur Folge, welcher nur um ca. 27 % geringer ist, wohingegen der Spannungsabfall an den Widerständen R1 bis R6 um fast 60 % zurückgeht.

Das Verhältnis der Teilspannung U_{R0} einerseits zu den Teilspannungen U_{R1} bis U_{R6} andererseits beträgt 370 V/170 V = 2,18 bei einer Hochspannung D_{V} vorn 1400 V und 270 V/70 V = 3,86 bei einer Hochspannung H_{V} von 700 V und ist damit von der Hochspannung H_{V} abhängig und verändert sich automatisch mit dieser.

Der Widerstand R0 wird im diesem Beispiel durch eine Verringerung der anliegenden Hochspannung H_{V} also größer und zeigt demzufolge eine nicht-ohmsches Verhalten.

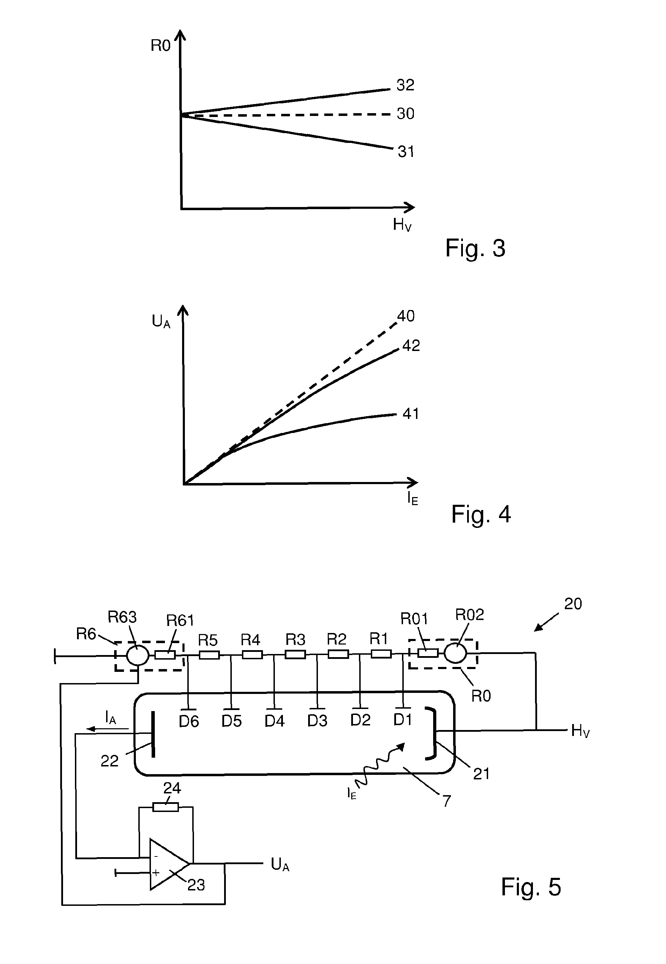

Dieses Verhalten ist in Fig. 3 veranschaulicht. Im Gegensatz zu einem ohmschen Widerstand, welcher unabhängig von der jeweils anliegenden Hochspannung H_{V} ist (Linie 30), zeigt der erfindungsgemäß eingesetzte Widerstand R0 eine Abhängigkeit von der jeweils anliegenden Hochspannung H_{V}, indem dieser mit zunehmender Hochspannung H_{V} abnimmt bzw. mit abnehmender Hochspannung H_{V} zunimmt (Linie 31). Der Widerstand R0 kann aber auch ein nicht-ohmsches Verhalten zeigen, bei welchen dieser mit zunehmender Hochspannung H_{V} zunimmt bzw. mit abnehmender Hochspannung H_{V} abnimmt (Linie 32), was z.B. durch einen entsprechend gewählten und/oder gestalteten nicht-ohmschen Teilwidersand R02 erreicht werden kann. Der Verlauf 31 bzw. 32 muss in beiden Fällen nicht unbedingt einer Geraden entsprechen, sondern kann eine beliebige andere Form aufweisen.

Nach dem oben beschriebenen Prinzip können auch andere Widerstände R1 bis R6 der elektrischen Schaltung 20 durch einen entsprechenden spannungsabhängigen Widerstand ersetzt werden, wie in dem in Fig. 2 dargestellten Beispiel im Falle des Widerstands R6, der sich am Ende der Spannungsteilerkette befindet und einen ohmschen Teilwiderstand R61 sowie einen nicht-ohmschen Teilwiderstand R62, welcher vorzugsweise als Konstantspannungsquelle ausgebildet ist, umfasst.

Fig. 4 zeigt ein Diagramm zur Veranschaulichung des Verhaltens des erfindungsgemäß beschalteten Photomultipliers 7, wobei der Verlauf der Ausgangsspannung U_{A} in Abhängigkeit von der Intensität des erfassten Emissionslichts I_{E} dargestellt ist. Gegenüber dem Verlauf 41 eines konventionell beschalteten PMT zeigt der erfindungsgemäß beschaltete PMT 7 einen Verlauf 42, welcher sich sehr nahe am idealen linearen Verlauf 40 befindet.

Wie sich herausgestellt hat, wird das Linearitätsverhalten des PMT 7 insbesondere von der Höhe des zwischen der Kathode 21 und der ersten Dynode D1 eingestellten Spannungsabfalls beeinflusst. Es ist daher von Vorteil, diesen Spannungsabfall durch eine entsprechende Dimensionierung des Spannungsteilers um einen Faktor von etwa 2 bis 3 größer zu machen als den Spannungsabfall zwischen den übrigen Dynoden D2 bis D6. Dies wird durch die erfindungsgemäße Verwendung des spannungsabhängigen Widerstandes R0 auch bei unterschiedlichen Hochspannungen H_{V} gewährleistet, wie die oben beschriebenen Beispiele für Hochspannungen von 1400 V und 700 V zeigen, bei welchen der Spannungsabfall zwischen Kathode 21 und erster Dynode D1 im Verhältnis zu den übrigen Dynoden um einen Faktor 370 V/170 V = 2,18 bzw. einen Faktor 270 V/70 V = 3,86 höher ist, während dieser bei einem konventionell beschalteten PMT für jede anliegende Hochspannung stets gleich hoch wäre (im obigen Beispiel wäre dieser Faktor 200 V/200 V = 100 V/100 V = 1) und damit insbesondere bei kleineren Hochspannungen H_{V} zu einer wesentlich schlechteren Linearität des PMT 7 führen würde als bei größeren Hochspannungen H_{V}.

Fig. 5 zeigt ein zweites Beispiel einer elektrische Schaltung zur Beschaltung des Photomultipliers 7. Es gelten im Wesentlichen die Erläuterungen zu dem in Fig. 2 gezeigten Beispiel, wobei abweichend dazu der Widerstand R6 derart ausgestaltet ist, dass dieser von der mittels Spannungswandler 23, 24 aus dem Ausgangsstrom I_{A} des PMT 7 erzeugten Ausgangsspannung U_{A} abhängig ist. Der Widerstand R6 weist in diesem Fall einen ohmschen Teilwiderstand R61 und einen nicht-ohmschen Teilwiderstand R63 auf, der als Spannungsquelle ausgebildet ist, deren Spannung von der Höhe der Ausgangsspannung U_{A} gesteuert werden kann.

Analog zu den im Zusammenhang mit Fig. 2 erläuterten Beispielen ist bei diesem Ausführungsbeispiel das Verhältnis der Teilspannung U_{R6} einerseits zu den Teilspannungen U_{R0} bis U_{R5} von dem jeweils erzeugten Ausgangsstrom I_{A} des PMT 7 bzw. der daraus abgeleiteten Ausgangsspannung U_{A} abhängig und verändert sich automatisch mit diesem bzw. dieser.

Dadurch kann eine weitere Annäherung des PMT-Verhaltens an eine ideale Übertragungskennlinie, insbesondere an den in Fig. 4 gezeigten idealen linearen Verlauf 40 der U_{A}-I_{E}-Abhängigkeit, erreicht werden. Die Bildqualität der aus der Speicherleuchtstoffschicht 1 ausgelesenen Röntgenaufnahme wird dadurch noch weiter erhöht.

Der Widerstand R0 ist in dem in Fig. 5 gezeigten Beispiel wie auch bei dem in Fig. 2 gezeigten Beispiel vorzugsweise als von der Hochspannung H_{V} abhängiger Widerstand ausgebildet. Dies ist aber keine Voraussetzung für die Funktionalität der Beschaltung des PMT 7 durch einen Spannungsteiler, bei welchem wenigstens ein Widerstand - in diesem Fall R6 - durch einen von der Ausgangsspannung U_{A} gesteuerten Widerstand R6 ersetzt wird.

In den dargestellten Beispielen wurden nur die beiden Widerstande R0 und R6 des Spannungsteilers R0 bis R6 als Schaltungselemente beschrieben, deren Widerstand von der anliegenden Hochspannung H_{V} bzw. vom Ausgangssignal des PMT 7, d.h. von der aus dem Ausgangsstrom I_{A} abgeleiteten Ausgangsspannung U_{A}, abhängig ist. Zur weiteren Verbesserung des PMT-Verhaltens können alternativ oder zusätzlich aber auch die übrigen Widerstände R1 bis R5 - ganz oder teilweise - durch entsprechende Schaltungselemente mit nicht-ohmschen Widerstandsanteilen ersetzt werden.

In einer weiteren Variante der in Fig. 2 beschriebenen elektrischen Schaltung 20 kann vorgesehen sein, dass die beiden Schaltungselemente R0 und R6, die zwischen der Kathode 21 und der ersten Dynode D1 geschaltet bzw. der letzten Dynode D6 nachgeschaltet sind, jeweils als Konstantspannungsquelle ausgebildet sind und keinen zusätzlichen ohmschen Teilwiderstand R01 bzw. R61 enthalten. Auch bei dieser Variante ändern sich die Verhältnisse der Teilspannungen U_{R0} und U_{R6} einerseits zu den Teilspannungen U_{R1} bis U_{R5} andererseits in Abhängigkeit von der anliegenden Hochspannung H_{V}, wobei neben den oben erwähnten Vorteilen darüber hinaus eine von der Höhe der jeweils anliegenden Hochspannung H_{V} unabhängiger Vervielfachungsfaktor des PMT 7 erreicht wird. Auf diese Weise wird zusätzlich dazu beigetragen, eine hohe Bildqualität auch bei unterschiedlichen großen Hochspannungen H_{V} und/oder Lichtintensitäten I_{E} zu gewährleisten.

## Patentansprüche

1. Elektrische Schaltung (20) zur Beschaltung eines Photomultipliers (7), welcher zum Erfassen von Licht und zum Umwandeln des erfassten Lichts in ein Ausgangssignal (I_{A}, U_{A}) ausgebildet ist und eine oder mehrere Dynoden (D1 - D6) sowie eine Anode (22) aufweist, mit einem Spannungsteiler (R0 - R6), welcher mehrere Widerstände (R1 - R6) umfasst, durch welche eine am Spannungsteiler (R0 - R6) anliegende Hochspannung (H_{V}) in mehrere Teilspannungen (U_{R0} U_{R6}) zerlegt wird, welche an den Dynoden (D1 - D6) anliegen, und mindestens einem Schaltungselement (R0, R6), durch welches zumindest ein Teil der Verhältnisse von Teilspannungen (U_{RO} - U_{R6}) zueinander in Abhängigkeit von der Hochspannung (H_{V}) und/oder vom Ausgangssignal (I_{A}, U_{A}) automatisch verändert wird,
**dadurch gekennzeichnet, dass**
das Schaltungselement (R6) als ein von der Hochspannung (H_{V}) bzw. vom Ausgangssignal (I_{A}, U_{A}) abhängiger Widerstand (R6) ausgebildet ist, welcher einer letzten Dynode (D6), die der Anode (22) am nächsten liegt, nachgeschaltet ist.

2. Vorrichtung zum Auslesen von in einer Speicherleuchtstoffschicht (1) gespeicherter Röntgeninformation mit
- einer Bestrahlungseinrichtung (2, 4, 5) zum Bestrahlen der Speicherleuchtstoffschicht (1) mit Stimulationslicht (3), welches die Speicherleuchtstoffschicht (1) zur Aussendung von Emissionslicht anregen kann,
- einem Photomultiplier (7) zum Erfassen von von der Speicherleuchtstoffschicht (1) ausgehendem Emissionslicht und zum Umwandeln des erfassten Emissionslichts in ein Ausgangssignal (I_{A}, U_{A}), wobei der Photomultiplier (7) eine oder mehrere Dynoden (D1 - D6) aufweist, und
- einer elektrischen Schaltung (20) nach Anspruch 1.

3. Vorrichtung nach Anspruch 2 wobei der von der Hochspannung (H_{V}) bzw. vom Ausgangssignal (I_{A}, U_{A}) abhängige Widerstand (R6) einen Teilwiderstand (R62, R63) mit einem nicht-ohmschen Verhalten aufweist.

4. Vorrichtung nach Anspruch 3 wobei der Teilwiderstand (R62) mit nicht-ohmschem Verhalten als Konstantspannungsquelle ausgebildet ist.

5. Vorrichtung nach Anspruch 3 oder 4, wobei der Teilwiderstand (R63) des vom Ausgangssignal (I_{A}, U_{A}) abhängigen Widerstands (R6) als Spannungsquelle ausgebildet ist, deren Spannung in Abhängigkeit vom Ausgangssignal (I_{A}, U_{A}) einstellbar ist

6. Vorrichtung nach einem der Ansprüche 2 bis 5 wobei der von der Hochspannung bzw. vom Ausgangssignal (I_{A}, U_{A}) abhängige Widerstand ( R6) einen Teilwiderstand (R61) mit einem ohmschen Verhalten aufweist.

7. Vorrichtung nach einem der Ansprüche 2 bis 6, wobei das Ausgangssignal (I_{A}, U_{A}) ein von Photomultiplier (7) erzeugter Ausgangsstrom (I_{A}) oder eine aus dem Ausgangsstrom (I_{A}), vorzugsweise mittels eines Wandlers (23, 24), abgeleitete Ausgangsspannung (U_{A}) ist.

8. Vorrichtung nach Anspruch 2, wobei der Photomultiplier (7) eine Kathode (21) aufweist und ein Schaltungselement (R0), durch welches zumindest ein Teil der Verhältnisse von Teilspannungen (U_{R0} - U_{R6}) zueinander in Abhängigkeit von der Hochspannung (H_{V}) automatisch verändert wird, als ein von der Hochspannung (H_{V}) abhängiger Widerstand (R0) ausgebildet ist, welcher zwischen der Kathode (21) und einer ersten Dynode (D1), welcher der Kathode (21) am nächsten liegt, geschaltet ist.

9. Vorrichtung nach einem der Ansprüche 2 bis 8 wobei der von der Hochspannung (H_{V}) abhängige Widerstand (R6) in Reihe zwischen der letzten Dynode (D6) und einem Massepotenzial geschaltet ist.

10. Vorrichtung nach einem der Ansprüche 2 bis 9, wobei zumindest ein Teil der Widerstände (R1 - R5) als aktive Widerstände, insbesondere in Form von Transistorschaltungen, ausgebildet sind.

11. Photomultipliermodul (7, 20) mit einem Photomultiplier (7) und einer elektrischen Schaltung (20) nach Anspruch 1.

## Claims

1. Electrical circuit (20) for connecting a photomultiplier (7), which is designed for detecting light and for converting the detected light in an output signal (I_{A}, U_{A}) and which comprises one or more dynodes (D1 - 06) as well as an anode (22), with a voltage divider (R0 - R6) comprising several resistors (R1 - R6), which divide a high voltage (H_{V}) applied to the voltage divider (R0 - R6) in several sub-voltages (U_{R0} - U_{R6}), which are applied to the dynodes (D1 - D6), and at least one circuit element (R0, R6), by means of which at least part of the ratios of sub-voltages (U_{R0} - U_{R6}) to each other is automatically modified dependent on the high voltage (H_{V}) and/or of the output signal (I_{A}, U_{A}),
**characterized in that**
the circuit element (R6) is designed as a resistor (R6) which is dependent on the high voltage (H_{V}) or on the output signal (I_{A}, U_{A}), respectively, said resistor (R6) being arranged downstream of a last dynode (D6) which is closest to the anode (22).

2. Apparatus for reading out X-ray information stored in a storage phosphor layer (1) comprising
- an irradiation device (2, 4, 5) for irradiating the storage phosphor layer (1) with stimulating light (3), which is able to stimulate the storage phosphor layer (1) to emit emission light,
- a photomultiplier (7) for detecting emission light emitted by the storage phosphor layer (1) and for converting the detected emission light in an output signal (I_{A}, U_{A}), said photomultiplier (7) comprising one or more dynodes (D1 - D6), and
- an electrical circuit (20) according to claim 1.

3. Apparatus according to claim 2, wherein the resistor (R6), which is dependent on the high voltage (H_{V}) or the output signal (I_{A}, U_{A}), respectively, comprises a sub-resistor (R62, R63) with non-ohmic behaviour.

4. Apparatus according to claim 3, wherein the sub-resistor (R62) with non-ohmic behaviour is designed as a constant-voltage source.

5. Apparatus according to claim 3 or 4, wherein the sub-resistor (R63) of the resistance (R6), which is dependent on the output signal (I_{A}, U_{A}), is designed as a voltage source, the voltage of which can be adjusted dependent on the output signal (I_{A}, U_{A}).

6. Apparatus according to any of claims 2 to 5, wherein the resistor (R6), which is dependent on the high voltage (H_{V}) or the output signal (I_{A}, U_{A}), respectively, comprises a sub-resistor (R61) with ohmic behaviour.

7. Apparatus according to any of claims 2 to 6, wherein the output signal (I_{A}, U_{A}) is an output current (I_{A}) produced by photomultiplier (7) or an output voltage (U_{A}) which is derived from the output current (I_{A}), preferably by means of a converter (23, 24).

8. Apparatus according to claim 2, wherein the photomultiplier (7) comprises a cathode (21) and a circuit element (R0), by means of which at least part of the ratios of sub-voltages (U_{R0} - U_{R6}) to each other is automatically modified dependent on the high voltage (h_{V}), is designed as a resistor (R0), which is dependent on the high voltage (h_{V}), said resistor (R0) being arranged between the cathode (21) and a first dynode (D1) which is closest to the cathode (21).

9. Apparatus according to any of claims 2 to 8, wherein the resistor (R6), which is dependent on the high voltage (H_{V}), is connected in series between the last dynode (D6) and a mass potential.

10. Apparatus according to any of claims 2 to 9, wherein at least part of the resistors (R1 - R5) are designed as active resistors, in particular transistor circuits.

11. Photomultiplier module (7, 20) comprising a photomultiplier (7) and an electrical circuit (20) according to claim 1.

## Revendications

1. Circuit électrique (20) servant à connecter un photomultiplicateur (7) qui est conçu de façon à détecter de la lumière et à convertir la lumière détectée en un signal de sortie (I_{A}, U_{A}) et qui comprend une ou plusieurs dynodes (D1 - 06) et une anode (22), à un diviseur de tension (R0 - R6) comprenant plusieurs résistances (R1 - R6) divisant une haute tension (H_{V}) appliquée au diviseur de tension (R0 - R6) en plusieurs tensions partielles (U_{R0} - U_{R6}) appliquées aux dynodes (D1 - D6), et au moins un élément de circuit (R0, R6) permettant la modification automatique d'une partie des rapports de tensions partielles (U_{R0} - U_{R6}) mutuelles en fonction de la haute tension (H_{V}) et/ou du signal de sortie (I_{A}, U_{A}),
**caractérisé en ce que**
l'élément de circuit (R6) a la forme d'une résistance (R6) qui est fonction, respectivement, de la haute tension (H_{V}) et du signal de sortie (I_{A}, U_{A}), ladite résistance (R6) étant disposée en aval d'une dernière dynode (D6) qui est la plus proche de l'anode (22).

2. Dispositif servant à lire les informations radiographiques stockées dans une couche luminescente à mémoire (1), comprenant
- un dispositif d'irradiation (2, 4, 5) servant à irradier la couche luminescente à mémoire (1) avec de la lumière de stimulation (3) qui est capable de stimuler la couche luminescente à mémoire (1) afin de la faire émettre de la lumière d'émission,
- un photomultiplicateur (7) servant à détecter la lumière d'émission émise par la couche luminescente à mémoire (1) et à convertir la lumière d'émission détectée en un signal de sortie (I_{A}, U_{A}), ledit photomultiplicateur (7) comprenant une ou plusieurs dynodes (D1 - D6), et
- un circuit électrique (20) selon la revendication 1.

3. Dispositif selon la revendication 2, **caractérisé en ce que** la résistance (R6) qui est fonction, respectivement, de la haute tension (H_{V}) et du signal de sortie (I_{A}, U_{A}) comprend une résistance partielle (R62, R63) à comportement non ohmique.

4. Dispositif selon la revendication 3, **caractérisé en ce que** la résistance partielle (R62) à comportement non ohmique a la forme d'une source de tension constante.

5. Dispositif selon la revendication 3 ou 4, **caractérisé en ce que** la résistance partielle (R63) de la résistance (R6) qui est fonction du signal de sortie (I_{A}, U_{A}) a la forme d'une source de tension dont la tension est réglable en fonction du signal de sortie (I_{A}, U_{A}).

6. Dispositif selon l'une quelconque des revendications 2 à 5, **caractérisé en ce que** la résistance (R6) qui est fonction, respectivement, de la haute tension (H_{V}) et du signal de sortie (I_{A}, U_{A}) comprend une résistance partielle (R61) à comportement ohmique.

7. Dispositif selon l'une quelconque des revendications 2 à 6, **caractérisé en ce que** le signal de sortie (I_{A}, U_{A}) est un courant de sortie (I_{A}) produit par le photomultiplicateur (7) ou une tension de sortie (U_{A}) dérivée du courant de sortie (I_{A}), de préférence à l'aide d'un convertisseur (23, 24).

8. Dispositif selon la revendication 2, **caractérisé en ce que** le photomultiplicateur (7) comprend une cathode (21) et qu'un élément de circuit (R0) permettant la modification automatique d'au moins une partie de tensions partielles (U_{R0} - U_{R6}) mutuelles en fonction de la haute tension (H_{V}) est conçu comme une résistance (R0) qui est fonction de la haute tension (H_{V}), ladite résistance (R0) étant disposée entre la cathode (21) et une première dynode (D1) qui est la plus proche de la cathode (21).

9. Dispositif selon l'une quelconque des revendications 2 à 8, **caractérisé en ce que** la résistance (R6) qui est fonction de la haute tension (H_{V}) est connectée en série entre la dernière dynode (D6) et un potentiel de mise à la terre.

10. Dispositif selon l'une quelconque des revendications 2 à 9, **caractérisé en ce qu'**au moins une partie des résistances (R1 - R5) a la forme de résistances actives, en particulier de circuits de transistor.

11. Module de photomultiplicateur (7, 20) comprenant un photomultiplicateur (7) et un circuit électrique (20) selon la revendication 1.
